# EUROPÄISCHE PATENTSCHRIFT

(11) **EP 0 523 359 B1**
(45) Veröffentlichungstag und Bekanntmachung des Hinweises auf die Patenterteilung: **12.04.1995**
(21) Anmeldenummer: 92109257.3
(22) Anmeldetag: 02.06.1992
(51) Int. Cl.: B60N 3/02

(54) **Haltegriff für Fahrzeuge**
Handgrip for vehicles
Poignée pour véhicules

(30) Priorität: 15.06.1991 DE 4119802
(43) Veröffentlichungstag der Anmeldung: 20.01.1993
(73) Patentinhaber: Gebr. Happich GmbH, D-42097 Wuppertal (DE)
(72) Erfinder: Vaxelaire, Francis, F-70200 Lure (FR); Ronot, Pascal, F-70800 Conflans/Lanterne (FR)

(56) Entgegenhaltungen:
- EP-A- 0 301 612
- DE-A- 3 245 927
- DE-A- 3 616 441
- US-A- 4 342 136
- US-A- 4 686 741

## Beschreibung

Die Erfindung bezieht sich auf einen Haltegriff für Fahrzeuge, bestehend aus einem bügelförmigen Griffkörper, dessen Enden über Gelenkstifte mit an der Fahrzeugkarosserie befestigbaren Lagerböcken schwenkbeweglich verbunden sind, um den Griffkörper aus einer Nichtgebrauchslage, in der er sich in enger Anlage an der Fahrzeugkarosserie befindet, gegen die Kraft einer Rückstellfeder in eine von der Fahrzeugkarosserie abstehende Gebrauchslage schwenken zu können.

Ein Haltegriff der gattungsgemäßen Art ist z.B. durch die DE-A-38 29 209 bekanntgeworden. Der Vorteil derartiger, klappbeweglich in Fahrzeugen angeordneter Haltegriffe ist in erster Linie darin zu sehen, daß sie in der Nichtgebrauchslage eng an der Fahrzeugkarosserie anliegen und damit das Ein- oder Aussteigen von Fahrzeuginsassen nicht behindern. Dieser Vorteil muß allerdings durch eine erschwerte Montage erkauft werden, denn zum Anschrauben der Lagerböcke muß der Griffkörper gegen die Kraft der relativ starken Rückstellfeder oder -federn von den Lagerböcken weg, also in die Gebrauchsstellung geschwenkt werden, bevor die Befestigungsschrauben angesetzt und festgezogen werden können. Dieses Problem stellt sich bei einem durch die DE-A- 3 616 441 bekanntgewordenen Haltegriff nicht, weil bei diesem eine den Griffkörper in die Gebrauchslage schwenkende Feder vorgesehen ist und keine Feder, die den Griffkörper in enger Anlage an der ihm benachbarten Karosseriewand hält.

Der Erfindung liegt deshalb die Aufgabe zugrunde, einen Haltegriff der eingangs näher erwähnten Art so zu verbessern, daß die Montage desselben wesentlich erleichtert wird.

Zur Lösung dieser Aufgabe ist erfindungsgemäß vorgesehen, daß sich zwischen zumindest einem der Lagerböcke und dem daran angelenkten Ende des Griffkörpers eine denselben während der Haltegriffmontage in der Gebrauchslage haltende Sperrvorrichtung befindet, deren Sperrfunktion nach erfolgter Montage wieder aufhebbar ist. In einer bevorzugten Ausbildung gemäß dem Anspruch 2 weist die Sperrvorrichtung ein nach erfolgter Haltegriffmontage wegbrech- oder wegschwenkbares Sperrelement auf.

Weitere zweckmäßige Ausgestaltungen und vorteilhafte Weiterbildungen der Erfindungen sind in den Ansprüchen 3-13 angegeben.

Ausführungsbeispiele der Erfindung werden nachfolgend anhand der Zeichnungen näher erläutert. Es zeigen:
- Fig. 1 bis 3: ein erstes,
- Fig. 4: ein zweites,
- Fig. 5: ein drittes,
- Fig. 6: ein viertes,
- Fig. 7: ein fünftes,
- Fig. 8: ein sechstes und
- Fig. 9 bis 11: ein siebtes Ausführungsbeispiel.

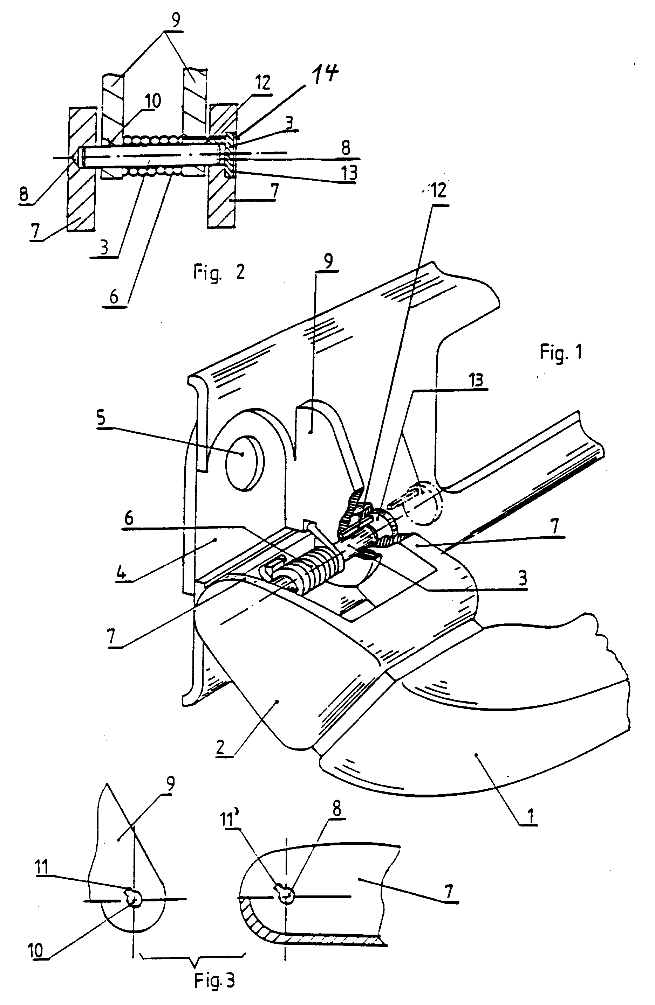

Der Haltegriff nach den Fig. 1 bis 3 besteht aus einem bügelförmigen Griffkörper 1, dessen Enden 2 über Gelenkstifte 3 mit an der Fahrzeugkarosserie befestigbaren Lagerböcken 4 schwenkbeweglich verbunden sind. Der nicht gezeigte rechte Bereich des Haltegriffs entspricht dem dargestellten linken Bereich desselben. Fig. 1 zeigt die geöffnete Stellung des Haltegriffs, in der sich der Griffkörper 1 in der Gebrauchslage befindet. Nur in dieser Stellung des Griffkörpers 1 ist es möglich, die Lagerböcke 4 an der erwähnten Fahrzeugkarosserie zu befestigen, wozu die Lagerböcke 4 jeweils eine Bohrung 5 zum Durchführen einer Befestigungsschraube od. dgl. aufweisen. Das Auf- bzw. Herunterklappen des Griffkörpers 1 aus der Nichtgebrauchslage in die Gebrauchslage erfolgt gegen die Kraft zumindest einer Rückstellfeder 6, die auf einem der Gelenkstifte 3 angeordnet ist. Der Griffkörper 1 wird durch die Rückstellfeder 6 permanent in Richtung Nichtgebrauchslage belastet.

Die Enden 2 des Griffkörpers 1 weisen jeweils zwei im Abstand und parallel zueinander verlaufende Lagerflansche 7 mit Lagerbohrungen 8 auf. Zwischen die Lagerflansche 7 greifen jeweils zwei Lagerflansche 9 der Lagerböcke 4 ein, die ebenfalls mit Lagerbohrungen 10 versehen sind. Die Gelenkstifte 3 durchsetzen die Lagerbohrungen 8 und 10 und legen damit den Griffkörper 1 schwenkbeweglich an den Lagerböcken 4 fest.

In einem der Lagerflansche 7 und einem der Lagerflansche 9 ist die Lagerbohrung 8 bzw. 10 jeweils mit einer Öffnung (Bohrungserweiterung) 11, 11' ausgebildet, so daß eine schlüssellochartige Gestaltungsform (vgl. auch Fig. 3) vorliegt. In der geöffneten Lage des Griffkörpers 1 nach Fig. 1 fluchten die Bohrungserweiterungen 11 miteinander und ermöglichen damit das Durchstecken eines Stiftes 12, der den Griffkörper 1 daran hindert, sich in die Nichtgebrauchslage zurückzubewegen. Der Haltegriff nach Fig. 1 bis 3 kann somit, in der aus Fig. 1 ersichtlichen geöffneten Lage des Griffkörpers 1 den Automobilherstellern angeliefert und hier problemlos montiert werden. Nach erfolgter Griffmontage genügt dann ein kurzer Schlag auf den Griffkörper 1, um ein Brechen des Stiftes 12 und damit eine Aufhebung der Sperrfunktion desselben herbeizuführen. Zweckmäßigerweise wird das Brechen des Stiftes durch eine daran durch eine Materialverdünnung vorgegebene Sollbruchstelle erleichtert.

Im Ausführungsbeispiel des Haltegriffs nach Fig. 1 bis 3 sitzt der Stift 12 in exzentrischer Anordnung an einer runden Abdeckscheibe 13, die in eine Lagerbohrungserweiterung 14 eingreift. Damit wird ein sauberer Abschluß, erzielt, wozu auch beiträgt, daß die gegenüberliegende Lagerbohrung 8 als Sackloch ausgeführt ist.

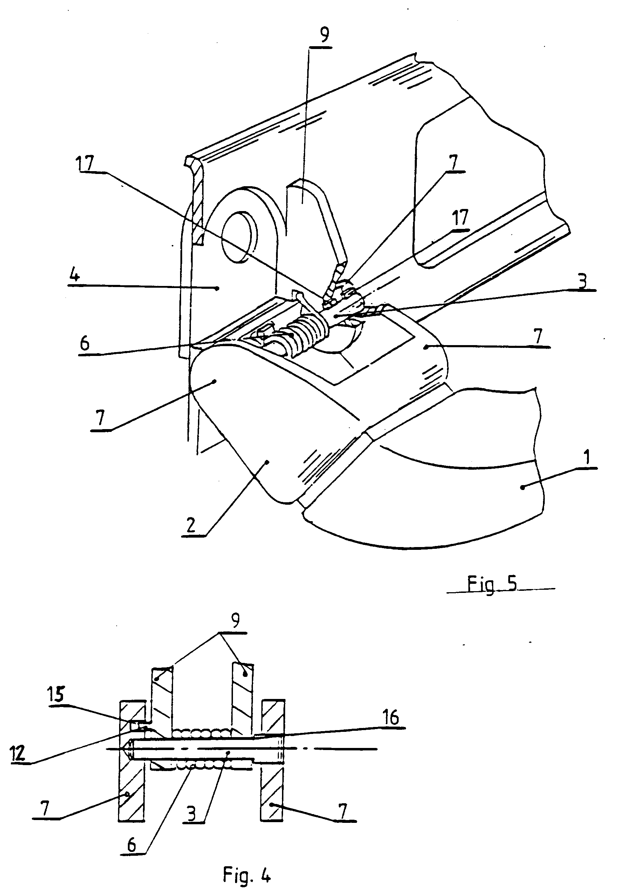

In Fig. 4 ist lediglich ein mit Fig. 2 vergleichbarer Bereich eines Haltegriffes dargestellt, der sich von dem vorbeschriebenen Ausführungsbeispiel im wesentlichen dadurch unterscheidet, daß hier an einem der Lagerflansche 9 eines Lagerbocks 4 ein nach erfolgter Griffmontage wegbrechbarer Stift 12 angeordnet ist. Der Stift 12 greift in eine, in einem der Lagerflansche 7 ausgebildete Öffnung 15 ein, wenn sich der Griffkörper 1 in der geöffneten Lage, wie in Fig. 1 dargestellt, befindet. Die Montage des Griffteils 1 wird durch ein relativ großes Seitenspiel zwischen den Lagerflanschen 7 und 9 ermöglicht und das relativ große Lagerspiel wird durch den mit einem Bund 16 ausgebildeten Gelenkstift 3, auf dem die Rückstellfeder 6 sitzt, wieder aufgehoben.

Das Ausführungsbeispiel nach Fig. 5 entspricht im grundsätzlichen Aufbau dem nach Fig. 1 bis 3, so daß für gleiche Teile auch gleiche Bezugsziffern (was auch für die weiteren Ausführungsbeispiele gilt) verwendet werden. Die Sperrvorrichtung beim Haltegriff nach Fig. 5 wird gebildet durch am Gelenkstift 3 unmittelbar angeordnete Nocken 17, die in Bohrungserweiterungen 11 der Lagerbohrungen 8 und 10 (vgl. auch Fig. 3) eingreifen. Zumindest einer der Nocken 17 ist wegbrechbar am Gelenkstift 3 angeordnet, wobei die Brechbarkeit durch eine Sollbruchstelle unterstützt wird. Zweckmäßigerweise besteht der Gelenkstift 3 beim Ausführungsbeispiel nach Fig. 5 aus einem Kunststoff-Spritzgußteil, an dem die Nocken 17 unmittelbar angeformt sind.

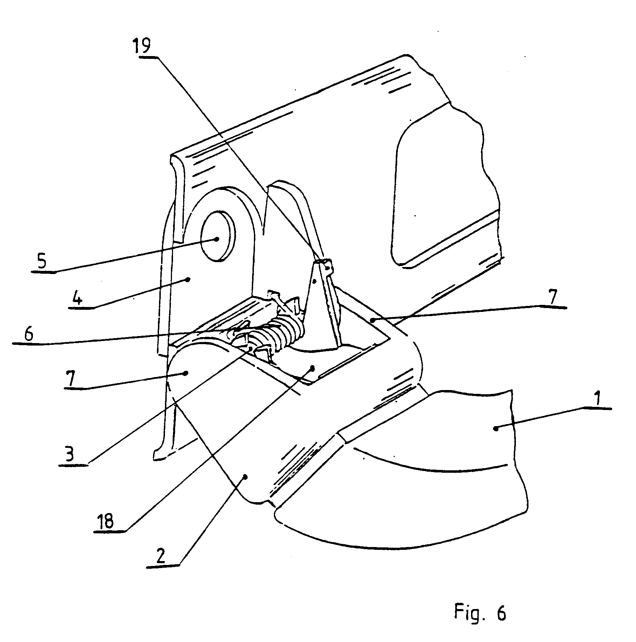

Beim Ausführungsbeispiel des Haltegriffs nach Fig. 6 ist zwischen den Lagerflanschen 9 des Lagerbocks 4 ein Einsatzteil 18, vom Gelenkstift 3 gehalten angeordnet, das sich einerseits am Griffkörperende 2 und andererseits mit einem, an einem Armende sitzenden Haken 19 an einem Lagerflansch 9 abstützt, um eine Bewegung des Griffkörpers 1 in die Nichtgebrauchslage zu verhindern. Der Haken 19 kann nach erfolgter Haltegriffmontage unter Krafteinwirkung auf den Griffkörper 1 abgebrochen werden.

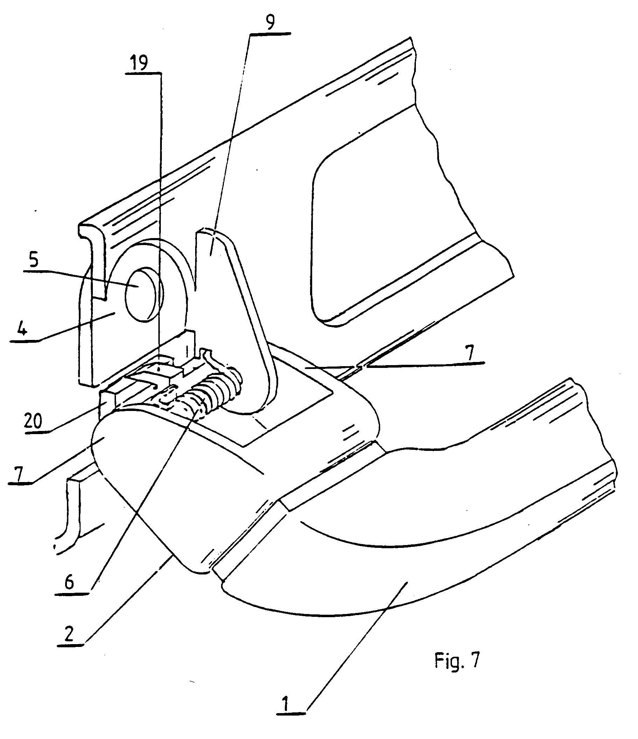

Während die bisher beschriebenen Ausführungsbeispiele des neuen Haltegriffs eine geöffnete Anlieferung des Griffkörpers verlangen, zeigt Fig. 7 eine Lösung, die es ermöglicht, den Haltegriff in der geschlossenen und damit platzsparenden Nichtgebrauchslage anzuliefern. Um dies zu erreichen, ist an einem Ende 2 des Griffkörpers 1 ein Haken 19 als Sperrelement angeordnet, der sich auf dem Rand einer freigesparten elastischen Zunge 20 des zugehörigen Lagerbocks 4 abstützt. Vor der Montage des Haltegriffs wird der Griffkörper 1 von der Nichtgebrauchslage in die Gebrauchslage überführt, wobei der sich mitbewegende Haken 19 die Zunge 20 nach außen zwingt, die, nachdem sie vom Haken 19 passiert wurde, wieder in die Ausgangslage zurückfedert. Danach liegt der Haken, wie aus Fig. 7 ersichtlich, auf dem oberen Rand der Zunge 20 auf, mit der Folge, daß der Griffkörper 1 an einer Zurückbewegung in die Nichtgebrauchslage gehindert wird. Der Haltegriff kann nunmehr bequem montiert, also an der Fahrzeugkarosserie befestigt werden und die Funktion des Griffes läßt sich durch Wegbrechen des Hakens 19, z.B. durch einen Handballenschlag auf den Griffkörper 1 herstellen.

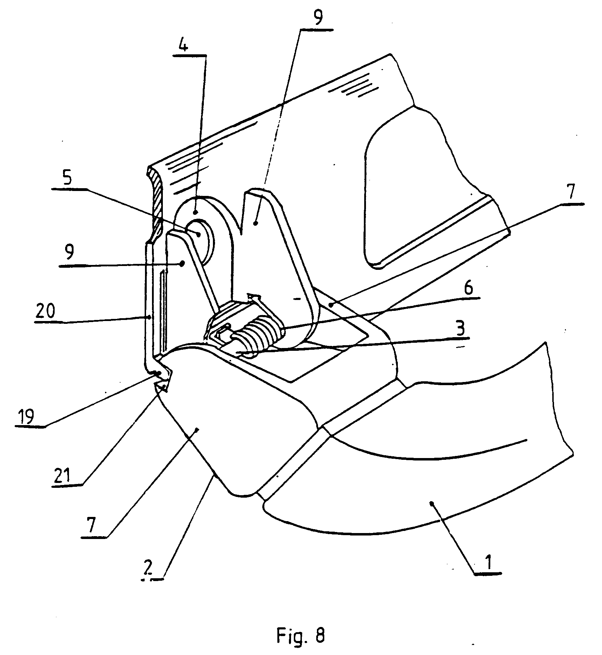

Fig. 8 zeigt eine, dem Ausführungsbeispiel nach Fig. 7 verwandte Lösung. Hier ist an einem Ende einer von einem Lagerbock 4 freigesparten elastischen Zunge 20 ein Haken 19 als Sperrelement angeordnet, der beim Überführen des Griffkörpers 1 aus der Nichtgebrauchslage in die Gebrauchslage, bei dem die Zunge 20 elastisch aus der Anlagefläche des Lagerbocks 4 herausgeschwenkt wird in eine Ausnehmung 21 am zugehörigen Griffkörperende 2 einzurasten vermag, um den Griffkörper 1 während der Haltegriffmontage in der Offen- bzw. Gebrauchsstellung zu halten. Nach erfolgter Griffmontage läßt sich der Haken 19, der auch wieder mit einer Sollbruchstelle ausgebildet sein sollte, wegbrechen, wonach der Haltegriff in Benutzung genommen werden kann.

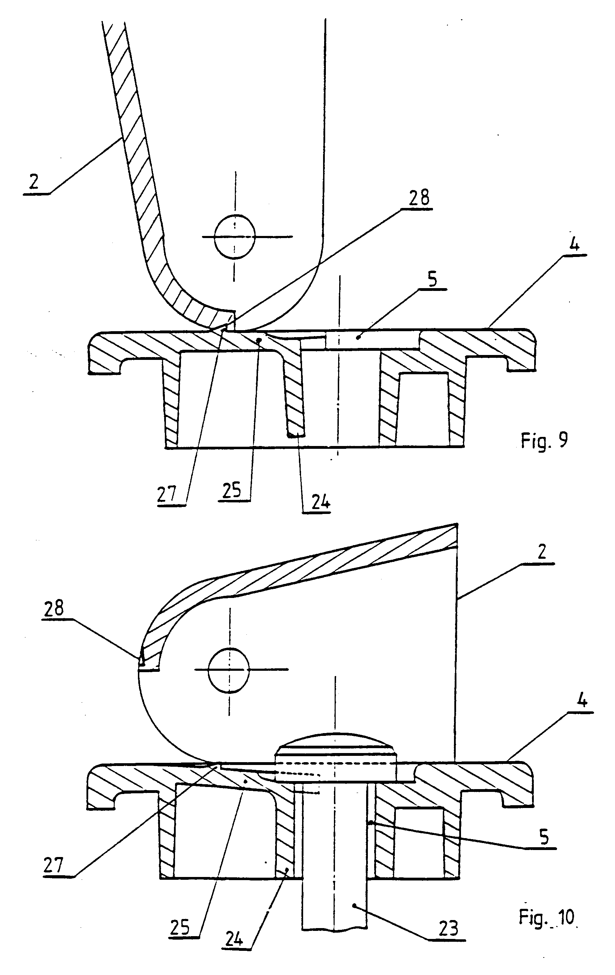

Alle bisher beschriebenen Ausführungsbeispiele des neuen Haltegriffs haben miteinander gemeinsam, daß die Sperrvorrichtung mit einem nach erfolgter Griffmontage wegbrechbaren Halteelement ausgerüstet ist. Demgegenüber zeigt der in den Fig. 9 bis 11 dargestellte Haltegriff eine Lösung mit einem wegschwenkbaren Sperrelement. Diese Lösung bringt insbesondere den Vorteil, daß keine weggebrochenen Abfallstücke in einem Fahrzeug anfallen.

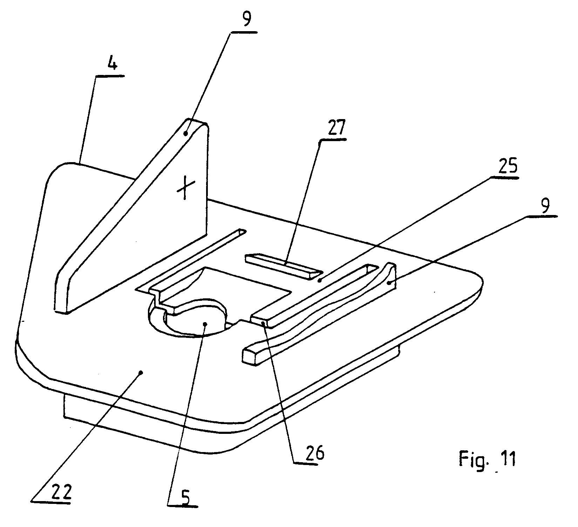

In den Fig. 9 und 10 sind lediglich die Enden 2 eines in den vorbeschriebenen Ausführungsbeispielen gezeigten Griffkörpers 1 dargestellt, und zwar im Zusammenhang mit einem Lagerbock 4. Fig. 11 zeigt eine separate Darstellung eines solchen Lagerbocks 4. Zu dem Haltegriff nach Fig. 9 bis 11 gehören natürlich die Elemente wie vorbeschrieben, also Gelenkstifte 3 und Rückstellfeder 6.

Der Lagerbock 4 nach Fig. 9 bis 11 weist eine Basisplatte 22 mit einer Bohrung 5 zum Durchführen eines Befestigungselements, wie Schraube 23 auf. Die Basisplatte 22 ist mit einer dreiseitig freigesparten, aus der Plattenebene entgegen der Anschraubrichtung schräg herausgestellten Zunge 25 ausgebildet. Dabei verläuft das freie Zungenende 26 etwa mittig durch die Bohrung 5, die damit unterbrochen ausgeführt ist. Die Zunge 25 ist mit einem von der Bohrung 5 beabstandeten Rastvorsprung 27 ausgebildet, der in eine Rastausnehmung 28 am Griffkörperende 2 eingreift.

Fig. 9 zeigt den Haltegriff im Anlieferungszustand und es ist ersichtlich, daß sich der Griffkörper 1 in der offenen Gebrauchsstellung, in der die Bohrung 5 zugänglich ist, befindet, in der er durch den in die Rastausnehmung 28 eingreifenden Rastvorsprung 27 gehalten wird. Durch Eindrehen der Befestigungsschraube 23 in eine karosserieseitige Schraubenaufnahme, wird die schräg stehende Zunge 25 in die Plattenebene eingeschwenkt, wobei gleichzeitig die Sperrfunktion des Rastvorsprungs 27, der mit der Schwenkbewegung der Zunge 25 aus der Rastausnehmung 28 herausgleitet, aufgehoben wird, Nach erfolgter, aus Fig. 10 ersichtlicher Griffmontage, kann der Haltegriff in gewohnter Weise benutzt werden.

Die Lagerböcke 4 und der Griffkörper 1 sind bevorzugtenweise als Kunststoff-Spritzgußteile ausgebildet und weisen dabei die Sperrelemente einstückig und materialeinheitlich angeformt auf.

## Patentansprüche

1. Haltegriff für Fahrzeuge, bestehend aus einem bügelförmigen Griffkörper (1), dessen Enden (2) über Gelenkstifte (3) mit an der Fanrzeugkarosserie befestigbaren Lagerböcken (4) schwenkbeweglich verbunden sind, um den Griffkörper (1) aus einer Nichtgebrauchslage, in der er sich in enger Anlage an der Fahrzeugkarosserie befindet, gegen die Kraft einer Rückstellfeder (6) in eine von der Fahrzeugkarosserie abstehende Gebrauchslage schwenken zu können, dadurch gekennzeichnet, daß sich zwischen zumindest einem der Lagerböcke (4) und dem daran angelenkten Ende (2) des Griffkörpers (1) eine denselben während der Haltegriffmontage in der Gebrauchslage haltende Sperrvorrichtung befindet, deren Sperrfunktion nach erfolgter Haltegriffmontage aufhebbar ist.

2. Haltegriff nach Anspruch 1, dadurch gekennzeichnet, daß die Sperrvorrichtung ein, wegbrech- oder wegschwenkbares Sperrelement aufweist.

3. Haltegriff nach Anspruch 2, dadurch gekennzeichnet, daß das Sperrelement eine Öffnung (11) in einem der Lagerböcke (4) und eine Öffnung (11') in einem Ende (2) des Griffkörpers (1) zu durchsetzen vermag, wenn sich der Griffkörper (1) gegenüber den Lagerböcken (4) in der Gebrauchslage befindet.

4. Haltegriff nach Anspruch 3, dadurch gekennzeichnet, daß die Öffnungen (11 11') für das Sperrelement mit den Lagerbohrungen (8, 10) für den Gelenkstift (3) in einander übergehen und die Lagerbohrungen (8, 10) somit schlüssellochartig ausgebildet sind.

5. Haltegriff nach Anspruch 3 oder 4, dadurch gekennzeichnet, daß das Sperrelement aus einem Stift (12) besteht.

6. Haltegriff nach Anspruch 5, dadurch gekennzeichnet, daß der Stift (12) in exzentrischer Anordnung an einer runden Abdeckscheibe (13) sitzt, die in eine Lagerbohrungserweiterung (14) eingreift.

7. Haltegriff nach Anspruch 4, dadurch gekennzeichnet, daß das Sperrelement aus zwei, an einem der Gelenkstifte (3) angeordneten Nocken (17) besteht, die in die ihren Abmessungen angepaßten Öffnungen (11 11') der den Gelenkstift (3) aufnehmenden Lagerbohrungen (8, 10) im Lagerbock (4) und Griffkörperende (2) eingreifen, wobei zumindest einer der Nocken (17) wegbrechbar am Gelenkstift (3) angeordnet ist.

8. Haltegriff nach Anspruch 2, dadurch gekennzeichnet, daß an einem Ende des Griffkörpers (1) ein von einem der Gelenkstifte (3) durchsetztes Anbauteil (18) angeordnet ist, welches einen Arm und einen am freien Armende angeordneten, sich am zugehörigen Lagerbock (4) abstützenden Haken (19) als Sperrelement aufweist.

9. Haltegriff nach Anspruch 2, dadurch gekennzeichnet, daß an einem Ende des Griffkörpers (1) ein Haken (19) als Sperrelement angeordnet ist, der sich auf dem Rand einer freigesparten elastischen Zunge (20) des zugehörigen Lagerbocks (4) abzustützen vermag.

10. Haltegriff nach Anspruch 2 dadurch gekennzeichnet, daß an einem Ende einer von einem Lagerbock (4) freigesparten elastischen Zunge (20) ein Haken (19) als Sperrelement angeordnet ist, der in eine Ausnehmung (21) am zugehörigen Griffkörperende (2) einzurasten vermag.

11. Haltegriff nach Anspruch 9 und/oder 10, dadurch gekennzeichnet, daß die elastische Zunge (20) des Lagerbocks (4) im nichtmontierten Zustand des Haltegriffs aus der karosserieseitigen Anlagefläche desselben herausschwenkbar ist.

12. Haltegriff nach Anspruch 2, dadurch gekennzeichnet, daß ein Lagerbock (4) eine Basisplatte (22) mit einer Bohrung (5) zum Durchführen einer Befestigungsschraube (23) aufweist, daß die Basisplatte (22) mit einer dreiseitig freigesparten, aus der Plattenebene entgegen der Anschraubrichtung schräg herausgestellten Zunge (25) ausgebildet ist, daß das freie Zungenende (26) etwa mittig durch die Bohrung (5), die damit unterbrochen ausgeführt ist, verläuft, daß die Zunge (25) einen von der Bohrung (5) beabstandeten Rastvorsprung (27) als Sperrelement aufweist, der in eine Rastausnehmung (28) an einem Griffkörperende (2) eingreift, und daß die Zunge (25) durch Eindrehen der Befestigungsschraube (23) in eine karosserieseitige Schraubenaufnahme in die Plattenebene einschwenkbar ist, um den Rastvorsprung (27) aus der Rastausnehmung (28) herauszuführen.

13. Haltegriff nach wenigstens einem der vorangegangenen Ansprüche, dadurch gekennzeichnet, daß die Lagerböcke (4) und der Griffkörper (1) aus Kunststoffmaterial bestehen und daß das Sperrelement jeweils einstückig und materialeinheitlich daran angeformt ist.

## Claims

1. Grab handle for vehicles, comprising a bow-shaped grip body (1), the ends (2) of which are pivotably connected by hinge pins (3) to bearing brackets (4) which can be fastened to the vehicle bodywork so as to be able to swivel the grip body (1) out of a non-usage position in which it is in close contact with the vehicle bodywork, against the force of a return spring (6), into a usage position protruding from the vehicle bodywork, characterized in that located between at least one of the bearing brackets (4) and the thereto attached end (2) of the grip body (1) there is a locking device, which holds the said grip body in the usage position whilst the grab handle is fitted and the locking function of which can be lifted once the grab handle fitting is completed.

2. Grab handle according to Claim 1, characterized in that the locking device exhibits a break-away or swivel-away locking element.

3. Grab handle according to Claim 2, characterized in that the locking element is capable of passing through an opening (11) in one of the bearing brackets (4) and an opening (11') in one end (2) of the grip body (1) whenever the grip body (1) is located, in relation to the bearing brackets (4), in the usage position.

4. Grab handle according to Claim 3, characterized in that the openings (11, 11') for the locking element, with the bearing bores (8, 10) for the hinge pin (3), merge into one another, and the bearing bores (8, 10) are thus configured in the manner of a keyhole.

5. Grab handle according to Claim 3 or 4, characterized in that the locking element comprises a pin (12).

6. Grab handle according to Claim 5, characterized in that the pin (12) is seated in eccentric arrangement on a round cover plate (13), which engages in a bearing bore widening (14).

7. Grab handle according to Claim 4, characterized in that the locking element comprises two cams (17) which are disposed on one of the hinge pins (3) and engage in the openings (11, 11'), matched to the dimensions of the said cams, in the bearing bores (8, 10) in the bearing bracket (4) and grip body end (2), which bearing bores receive the hinge pin (3), at least one of the cams (17) being disposed in break-away arrangement on the hinge pin (3).

8. Grab handle according to Claim 2, characterized in that at one end of the grip body (1) there is disposed a fit-on part (18), which is passed through by one of the hinge pins (3) and exhibits as locking element an arm and a hook (19), which latter is disposed at the free arm end and is supported against the associated bearing bracket (4).

9. Grab handle according to Claim 2, characterized in that at one end of the grip body (1) there is disposed as locking element a hook (19), which is capable of being supported on the margin of a recessed elastic tongue (20) of the associated bearing bracket (4).

10. Grab handle according to Claim 2, characterized in that at one end of an elastic tongue (20), which is recessed from a bearing bracket (4), there is disposed as locking element a hook (19) which is capable of latch-locking into a recess (21) at the associated grip body end (2).

11. Grab handle according to Claim 9 and/or 10, characterized in that the elastic tongue (20) of the bearing bracket (4), in the non-fitted state of the grab handle, can be swivelled out of the bodywork-sided contact face of the said grab handle.

12. Grab handle according to Claim 2, characterized in that a bearing bracket (4) exhibits a base plate (22) having a bore (5) for the passage of a fastening screw (23), in that the base plate (22) is configured having a tongue (25) which is recessed on three sides and is obliquely projected out of the plane of the plate counter to the screw-on direction, in that the free tongue end (26) runs approximately through the middle of the bore (5), which is hence of interrupted construction, in that the tongue (25) exhibits as locking element a latch projection (27) which is distanced from the bore (5) and engages in a latch recess (28) at an end (2) of the grip body, and in that the tongue (25), by tightening of the fastening screw (23), can be swivelled into a bodywork-sided screw fixture into the plane of the plate so as to guide the latch projection (27) out of the latch recess (28).

13. Grab handle according to at least one of the preceding claims, characterized in that the bearing brackets (4) and the grip body (1) consist of plastics material and in that the locking element is moulded respectively thereto in one piece and in the same material.

## Revendications

1. Poignée de maintien pour véhicules, composé d'un corps de poignée (1) en forme d'étrier, dont les extrémités (2) sont reliées à pivotement, par l'intermédiaire de tiges d'articulation (3), à des blocs de tourillonnement (4) pouvant être fixés sur la carrosserie du véhicule, pour pouvoir faire pivoter le corps de poignée (1) d'une position de non utilisation dans laquelle il se trouve en appui étroit sur la carrosserie du véhicule, à l'encontre de la force d'un ressort de rappel (6), dans une position d'utilisation s'écartant de la carrosserie du véhicule, caractérisée en ce que, entre au moins l'un des blocs de tourillonnement (6) et l'extrémité (2), articulée dessus, du corps de poignée (1), se trouve un dispositif de blocage maintenant ce corps de poignée (1) en position d'utilisation pendant le montage de la poignée, et dispositif dont la fonction de blocage peut être inhibée une fois le montage de la poignée de maintien effectué.

2. Poignée de maintien sel on la revendication 1, caractérisée en ce que le dispositif de blocage présente un élément de blocage pouvant être écarté par rupture ou par pivotement.

3. Poignée de maintien selon la revendication 2, caractérisée en ce que l'élément de blocage peut traverser une ouverture (11) ménagée dans l'un des blocs de tourillonnement (4) et une ouverture (11') ménagée dans une extrémité (2) du corps de poignée (2), lorsque le corps de poignée (1) se trouve en position d'utilisation par rapport aux blocs de tourillonnement (4).

4. Poignée de maintien selon la revendication 3, caractérisée en ce que les ouvertures (11, 11') destinées à l'élément de blocage se transforment en les perçages de tourillonnement (8, 10) destinés à la tige d'articulation (3) et les perçages de tourillonnement (8, 10) étant ainsi réalisé à la façon de trous de serrures.

5. Poignée de maintien selon la revendication 3 ou 4, caractérisée en ce que l'élément de blocage est composé d'une tige (12).

6. Poignée de maintien selon la revendication 5, caractérisée en ce que la tige (12) est placée excentriquement sur un disque de recouvrement (13) rond, s'engageant dans un élargissement (14) du perçage de tourillonnement.

7. Poignée de maintien selon la revendication 4, caractérisée en ce que l'élément de blocage est composé de deux ergots (17), disposés sur l'une des tiges d'articulation (3) et s'engageant dans les ouvertes (11, 11'), adaptées à leurs dimensions, des perçages de tourillonnement (8, 10) recevant la tige d'articulation (3) et ménagées dans le bloc de tourillonnement (4) et l'extrémité de corps de poignée (2), au moins l'un des ergots (17) étant monté, sur la tige d'articulation (3), de façon à pouvoir être enlevé par rupture.

8. Poignée de maintien selon la revendication 2, caractérisée en ce qu'à une extrémité du corps de poignée (1) est disposée une garniture (18), présentant un bras et un crochet (19), disposé à l'extrémité libre du bras et prenant appui sur le bloc du tourillonnement (4) correspondant et servant d'élément de blocage.

9. Poignée de maintien selon la revendication 2, caractérisée en ce que, sur une extrémité du corps de poignée (1) est disposé un crochet (19) servant d'élément de blocage et permettant un appui sur le bord d'une languette élastique (20), dotée d'une découpure, du bloc de tourillonnement (4) correspondant.

10. Poignée de maintien selon la revendication 2, caractérisée en ce que sur une extrémité d'une languette élastique (20) découpée à partir d'un palier de tourillonnement (4) est disposé un crochet (19), servant d'élément de blocage et pouvant s'encliqueter dans un évidement (21) ménagé sur l'extrémité (2) correspondante du corps de poignée.

11. Poignée de maintien selon la revendication 9 et/ou 10, caractérisée en ce que la languette élastique (20) du bloc de tourillonnement (4) peut, à l'état non monté de la poignée de maintien, être sortie par pivotement de la surface d'appui, côté carrosserie, de la poignée de maintien.

12. Poignée de maintien selon la revendication 2, caractérisé en ce qu'un bloc de tourillonnement (4) présente une plaque de base (22) avec un perçage (5) destiné à guider à l'intérieur une vis de fixation (23), en ce que la plaque de base (22) est réalisée avec une languette (25) découpée sur trois côtés, placée obliquement à l'encontre de la direction de dévissage par rapport au plan de la plaque, en ce que l'extrémité libre (26) de la languette s'étend à peu près au centre du perçage (5) réalisé ainsi de façon interrompu, en ce que la languette (25) présente une saillie d'encliquetage (27) située à distance du perçage (5) et faisant office d'élément de blocage, s'engageant dans un évidement d'encliquetage (28) ménagé à l'extrémité (2) de corps de poignée, et en ce que la languette (25) peut pivoter dans le plan de la plaque, par rotation de vissage de la vis de fixation (3 dans un logement de vis, situé côté carrosserie, pour faire sortir la saillie d'encliquetage (27) hors de l'évidement d'encliquetage (28).

13. Poignée de maintien sel on au moins l'une des revendications précédentes, caractérisé en ce que les blocs de tourillonnement (4) et le corps de poignée (1) sont en matière plastique et en ce que l'élément de blocage est chaque fois réalisé d'un seul tenant sur lui et dans le même matériau.
